# EUROPEAN PATENT APPLICATION

(11) **EP 4 582 278 A1**
(43) Date of publication of application: **09.07.2025**
(21) Application number: 23918204.1
(22) Date of filing: 26.10.2023
(51) Int. Cl.: B60K 1/02, B60K 17/08, B60K 17/04, B60B 35/14

(54) **AUTOMOBILE AND DUAL-ELECTRIC-MOTOR ELECTRIC DRIVE ASSEMBLY THEREOF**

(30) Priority: 29.01.2023 CN 202310086857
(71) Applicant: Wuxi InfiMotion Propulsion Technology Co., Ltd., Wuxi, Jiangsu 214181 (CN); Wuxi InfiMotion Technology Co., Ltd., Wuxi, Jiangsu 214181 (CN)
(72) Inventor: ZHAO, Yuting, Wuxi, Jiangsu 214181 (CN); CAI, Xiaohua, Wuxi, Jiangsu 214181 (CN); YE, Guanghai, Wuxi, Jiangsu 214181 (CN); ZHANG, Xu, Wuxi, Jiangsu 214181 (CN); TANG, Tianbao, Wuxi, Jiangsu 214181 (CN); LI, Wei, Wuxi, Jiangsu 214181 (CN); LI, Wei, Wuxi, Jiangsu 214181 (CN); YU, Haisheng, Wuxi, Jiangsu 214181 (CN); LIN, Xiaozhe, Wuxi, Jiangsu 214181 (CN)
(74) Representative: Range, Christopher William
(86) International application number: PCT/CN2023/126739
(87) International publication number: WO 2024/156203

(57) **Abstract**

Provided are a vehicle and a dual-electric motor electric drive assembly thereof. The dual-electric motor electric drive assembly includes a first drive mechanism and a second drive mechanism that are located at one drive axle. The first drive mechanism includes a first motor, a first parallel shaft gear mechanism, and a first half shaft that are connected sequentially. The second drive mechanism includes a second motor, a second parallel shaft gear mechanism, and a second half shaft that are connected sequentially. A structure of the first drive mechanism is different from a structure of the second drive mechanism to prevent an overlapping of a resonance frequency of the first drive mechanism and a resonance frequency of the second drive mechanism.

## Description

This application claims priority to Chinese Patent Applications No. 202310086857.9, filed on January 29, 2023 and titled "VEHICLE AND DUAL-ELECTRIC MOTOR ELECTRIC DRIVE ASSEMBLY THEREOF", the entire contents of which are incorporated herein by reference.

### FIELD

The present disclosure relates to an electric vehicle technology, and in particular, to a vehicle and a dual-electric motor electric drive assembly thereof.

### BACKGROUND

At present, with the development of new energy vehicle industry, electric vehicles have become a development trend. Performance of electric vehicles is attracting more and more attention, however, due to limitations in development of motor technology, when a current electric drive assembly using a single motor reaches high power, a size and weight of the electric drive assembly increases significantly, which restricts the development of high-performance electric vehicles. Meanwhile, against a background that consumers are paying more and more attention to performance, the demand for power configurations such as vector control and differential lock is ever-increasing. A single-motor transmission system solution needs to add a large number of mechanical mechanisms to realize these functions, which makes a size and weight of a single motor assembly both unable to be reduced.

Therefore, a solution of an electric drive assembly using double motors has increasingly become the focus of attention. By using two motors and corresponding transmission systems, requirements for high-performance electric vehicles are satisfied. Meanwhile, since each motor is equipped with the transmission system, the layout of the entire power assembly is more flexible, allowing for distributed placement of the two systems.

However, in the related art, compared with the single-motor electric drive assembly, the dual-electric motor electric drive assembly has overlapping orders and louder noise, resulting in a reduction in Noise, Vibration, Harshness (NVH) performance of the vehicle.

### SUMMARY

The following description is a summary of the subject matter described in detail herein. This summary is not intended to limit the scope of the claims.

The present disclosure provides a dual-electric motor electric drive assembly. The dual-electric motor electric drive assembly include a first drive mechanism and a second drive mechanism that are located at one drive axle. The first drive mechanism includes a first motor, a first parallel shaft gear mechanism, and a first half shaft that are connected sequentially. The second drive mechanism includes a second motor, a second parallel shaft gear mechanism, and a second half shaft that are connected sequentially. A structure of the first drive mechanism is different from a structure of the second drive mechanism to prevent an overlapping of a resonance frequency of the first drive mechanism and a resonance frequency of the second drive mechanism.

In an exemplary embodiment, a gear of the first parallel shaft gear mechanism is different from a gear of the second parallel shaft gear mechanism in shape.

In an exemplary embodiment, a spoke of the gear of the first parallel shaft gear mechanism is different from a spoke of the gear of the second parallel shaft gear mechanism in shape and/or thickness.

In an exemplary embodiment, a rotary shaft of the first parallel shaft gear mechanism is different from a rotary shaft of the second parallel shaft gear mechanism in length and/or shape.

In an exemplary embodiment, the first half shaft is different from the second half shaft in length and/or shape.

In an exemplary embodiment, the first motor includes a first main shaft connected to the first parallel shaft gear mechanism; and the second motor includes a second main shaft connected to the second parallel shaft gear mechanism. The first main shaft is different from the second main shaft in length and/or shape.

In an exemplary embodiment, a bearing of the first parallel shaft gear mechanism is different from a bearing of the second parallel shaft gear mechanism in type and/or size.

In an exemplary embodiment, the dual-electric motor electric drive assembly further includes a housing configured to accommodate the first motor, the first parallel shaft gear mechanism, the first half shaft, the second motor, the second parallel shaft gear mechanism, and the second half shaft; and a shape of the housing located at a side of the housing close to the first driving mechanism is different from a shape of the housing located at a side of the housing close to the second driving mechanism.

In an exemplary embodiment, the first half shaft, the first main shaft of the first motor, the second half shaft, and the second main shaft of the second motor are parallel to each other. The first parallel shaft gear mechanism includes: a first gear sleeved over and connected to the first main shaft; a first rotary shaft disposed at a side of the first main shaft and parallel to the first main shaft. The first rotary shaft is rotatable around its own axis; a second gear sleeved over the first rotary shaft, connected to the first rotary shaft, and engaged with the first gear; a third gear sleeved over and connected to the first rotary shaft; and a fourth gear sleeved over the first half shaft, connected to the first half shaft, and engaged with the third gear. The second parallel shaft gear mechanism includes: a fifth gear sleeved over and connected to the second main shaft; a second rotary shaft disposed at a side of the second main shaft and parallel to the second main shaft. The second rotary shaft is around its own axis; a sixth gear sleeved over the second rotary shaft, connected to the second rotary shaft, and engaged with the fifth gear; a seventh gear sleeved over and connected to the second rotary shaft; and an eighth gear sleeved over the second half shaft, connected to the second half shaft, and engaged with the seventh gear. A spoke of the first gear is different from a spoke of the fifth gear in shape and/or wall thickness. A spoke of the second gear is different from a spoke of the sixth gear in shape and/or wall thickness. A spoke of the third gear is different from a spoke of the seventh gear in shape and/or wall thickness, and a spoke of the fourth gear is different from a spoke of the eighth gear in shape and/or wall thickness.

In an exemplary embodiment, a length of the first rotary shaft is different from a length of the second rotary shaft.

The present disclosure also provides a vehicle. The vehicle includes the dual-electric motor electric drive assembly as described above.

In the technical solution of the present disclosure, since the structure of the first drive mechanism is different from the structure of the second drive mechanism, orders of the first drive mechanism and the second drive mechanism are separated, thereby avoiding an order overlap of the first drive mechanism and the second drive mechanism. As a result, order noise when the first drive mechanism and the second drive mechanism operate simultaneously can be significantly reduced, improving NVH performance of the vehicle and obtaining a better driving experience. Meanwhile, the first motor and the second motor may each be a motor with low power. When the first motor and the second motor operate simultaneously, the dual-electric motor electric drive assembly may output larger power to satisfy high-power output requirements of the vehicle. Since the first motor and the second motor may be controlled separately, power output at a side or two sides of the vehicle may be changed as power requirements, to realize functions of vehicle differential speed, differential lock, vector control, and the like, making the control more accurate. For example, by respectively controlling rotational speeds and torques of the first motor and the second motor, a differential speed and torque distribution between vehicle wheels may be realized, realizing straight traveling of the vehicle.

Other features and advantages of the present disclosure will be set forth in the following specification, and will become apparent in part from the specification, or will be learned by implementing the present disclosure. Other advantages of the present disclosure may be realized and obtained by the solutions described in the specification and the accompanying drawings.

Other aspects may be apparent upon reading and understanding the drawings and detailed descriptions.

### BRIEF DESCRIPTION OF THE DRAWINGS

The drawings are used for providing an understanding of technical solutions of the present disclosure, and constitute a part of the specification. In addition, the drawings and embodiments of the present disclosure are used for explaining the technical solutions of the present disclosure, rather than constituting limitations to the technical solutions herein.
FIG. 1 is a schematic view of a dual-electric motor electric drive assembly according to an embodiment of the present disclosure.
FIG. 2 is a schematic view of a gear of a plate-shaped spoke according to an embodiment of the present disclosure.
FIG. 3 is a schematic view of a gear of a spoke-shaped spoke according to an embodiment of the present disclosure.
FIG. 4 is a schematic perspective view of a housing of a dual-electric motor electric drive assembly according to an embodiment of the present disclosure.
FIG. 5 is a schematic front view of a housing of a dual-electric motor electric drive assembly according to an embodiment of the present disclosure.

### DETAILED DESCRIPTION

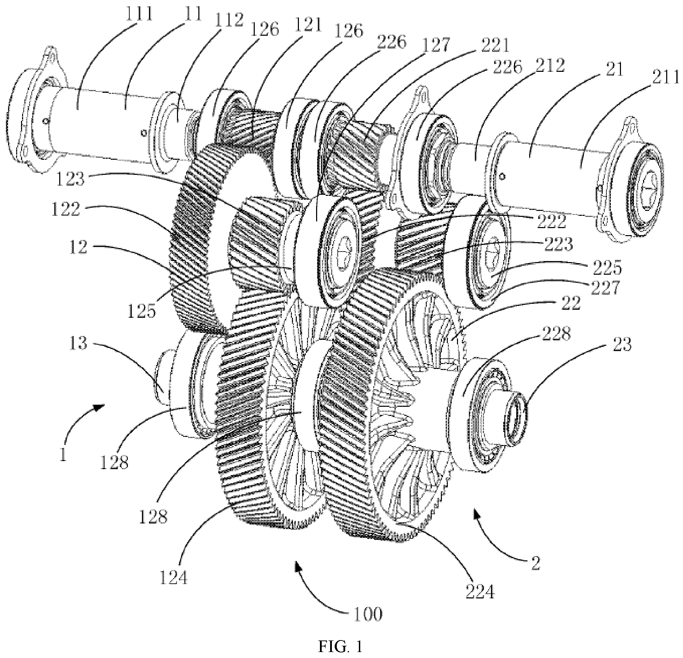

As illustrated in FIG. 1, FIG. 1 illustrates a structure of a dual-electric motor electric drive assembly 100 according to an embodiment. The dual-electric motor electric drive assembly 100 is mounted on a vehicle and provides the vehicle with driving power. The vehicle may be a pure electric vehicle.

The dual-electric motor electric drive assembly 100 includes a first drive mechanism 1 and a second drive mechanism 2. The first drive mechanism 1 and the second drive mechanism 2 may be disposed at one drive axle.

The first drive mechanism 1 includes a first motor 11, a first parallel shaft gear mechanism 12, and a first half shaft 13. The first parallel shaft gear mechanism 12 is disposed between the first half shaft 13 and the first motor 11. A main shaft of the first motor 11 is connected to the first parallel shaft gear mechanism 12, and the first parallel shaft gear mechanism 12 is connected to the first half shaft 13. The first parallel shaft gear mechanism 12 may be a speed reducer. After reducing a speed of a torque outputted by the first motor 11 and increasing the outputted torque, the first parallel shaft gear mechanism 12 may transmit the torque to the first half shaft 13 to drive the first half shaft 13 to rotate.

The second drive mechanism 2 includes a second motor 21, a second parallel shaft gear mechanism 22, and a second half shaft 23. The second parallel shaft gear mechanism 22 is disposed between the second half shaft 23 and the second motor 21. A main shaft of the second motor 21 is connected to the second parallel shaft gear mechanism 22, and the second parallel shaft gear mechanism 22 is connected to the second half shaft 23. The second parallel shaft gear mechanism 22 may be a speed reducer. After reducing a speed of a torque outputted by the second motor 21 and increasing the outputted torque, the second parallel shaft gear mechanism 22 may transmit the torque to the second half shaft 23 to drive the second half shaft 23 to rotate.

The first parallel shaft gear mechanism 12 and the second parallel shaft gear mechanism 22 are disposed close to each other. The first motor 11 and the second motor 12 are respectively disposed at one side of the first parallel shaft gear mechanism 12 and the second parallel shaft gear mechanism 22. The first motor 11 and the second motor 21 are arranged coaxially. The first half shaft 13 is disposed at a side of the first parallel shaft gear mechanism 12 facing away from the first motor 11. The second half shaft 23 is disposed at a side of the second parallel shaft gear mechanism 22 facing away from the second motor 21. The first half shaft 13 and the second half shaft 23 are arranged coaxially.

A structure of the first drive mechanism 1 is different from a structure of the second drive mechanism 2 to prevent an overlapping of a resonance frequency of the first drive mechanism 1 and a resonance frequency of the second drive mechanism 2. Optionally, the first motor 11 of the first drive mechanism 1 is different from the second motor 21 of the second drive mechanism 2 in structure. Optionally, the first parallel shaft gear mechanism 12 of the first drive mechanism 1 is different from the second parallel shaft gear mechanism 22 of the second drive mechanism 2 in structure. Optionally, the first half shaft 13 of the first drive mechanism 1 and the second half shaft 23 of the second drive mechanism 2 has a same structure.

Since the structure of the first drive mechanism 1 is different from the structure of the second drive mechanism 2, orders of the first drive mechanism 1 and the second drive mechanism 2 are separated, thereby avoiding an order overlap of the first drive mechanism 1 and the second drive mechanism 2. As a result, order noise when the first drive mechanism 1 and the second drive mechanism 2 operate simultaneously can be significantly reduced, improving NVH performance of the vehicle and obtaining a better driving experience. Meanwhile, the first motor 11 and the second motor 21 may be motors with low power. When the first motor 11 and the second motor 21 operate simultaneously, the dual-electric motor electric drive assembly 100 may output larger power to satisfy requirements of the vehicle for high-power output. Since the first motor 11 and the second motor 21 may be controlled separately, power output at a side or two sides of the vehicle may be changed as power requirements, to realize functions of vehicle differential speed, differential lock, vector control, and the like, making the control more accurate. For example, by respectively controlling rotational speeds and torques of the first motor 11 and the second motor 21, a differential speed and torque distribution between vehicle wheels may be realized, realizing straight traveling of the vehicle.

In an exemplary embodiment, the first motor 11 includes a first body 111 and a first main shaft 112. The first body 111 is constructed as a cylindrical shape. The first main shaft 112 extends out from an end of the first body 111. The first main shaft 112 and the first body 111 are arranged coaxially.

The second motor 21 includes a second body 211 and a second main shaft 212. The second body 211 is constructed as a cylindrical shape. The first body 111 and the second body 211 are arranged coaxially. The first main shaft 112 and the second main shaft 212 extend opposite to each other from an end where the first body 111 and the second body 211 are close to each other, respectively. The first main shaft 112 is coaxial with the second main shaft 212.

Gears of the first parallel shaft gear mechanisms 12 are in one-to-one correspondence with gears of the second parallel shaft gear mechanism 22.

The first parallel shaft gear mechanism 12 includes a first gear 121, a first rotary shaft 125, a second gear 122, a third gear 123, and a fourth gear 124. The first gear 121, the second gear 122, the third gear 123, and the fourth gear 124 are each cylindrical gears, and may be each helical gears. The first gear 121 is sleeved over and fixedly connected to the first main shaft 112. There may be a key connection between the first gear 121 and the first main shaft 112, such as a spline connection or a flat key connection. The first rotary shaft 125 is disposed at a side of the first main shaft 112 of the first motor 11 and parallel to the first main shaft 112. The first rotary shaft is around its own axis. The second gear 122 is sleeved over the first rotary shaft 125. The second gear 122 and the first rotary shaft 125 are connected together. There may be a key connection between the second gear 122 and the first rotary shaft 125, such as a spline connection or a flat key connection. The second gear 122 is engaged with the first gear 121. An outer diameter of the second gear 122 may be greater than an outer diameter of the first gear 121. The third gear 123 is sleeved over and fixedly connected to the first rotary shaft 125. The third gear 123 may be in a key connection, in a flat key connection, or in a spline connection with the first rotary shaft 125. An outer diameter of the third gear 123 may be smaller than the outer diameter of the second gear 122. The fourth gear 124 is sleeved over and connected to the first half shaft 13. There may be a key connection between the fourth gear 124 and the first half shaft 13, such as a spline connection or a flat key connection. The fourth gear 124 is engaged with the third gear 123. An outer diameter of the fourth gear 124 may be greater than the outer diameter of the third gear 123.

In this way, the first main shaft 112 of the first motor 11 drives the first gear 121 to rotate. Then, the first gear 121 drives the second gear 122 to rotate. Then, the second gear 122 drives the first rotary shaft 125 to rotate. Then, the first rotary shaft 125 drives the third gear 123 to rotate. Then, the third gear 123 drives the fourth gear 124 to rotate. Then, the fourth gear 124 drives the first half shaft 13 to rotate.

The second parallel shaft gear mechanism 22 includes a fifth gear 221, a second rotary shaft 225, a sixth gear 222, a seventh gear 223, and an eighth gear 224. The fifth gear 221, the sixth gear 222, the seventh gear 223, and the eighth gear 224 are each cylindrical gears, and may be each helical gears. The fifth gear 221 is sleeved over and fixedly connected to the second main shaft 212. There may be a key connection between the fifth gear 221 and the second main shaft 212, such as a spline connection or a flat key connection. The second rotary shaft 225 is disposed at a side of the second main shaft 212 of the second motor 21 and parallel to the second main shaft 212. The second rotary shaft is around its own axis. The sixth gear 222 is sleeved over the second rotary shaft 225. The sixth gear 222 and the second rotary shaft 225 are connected together. There may be a key connection between the sixth gear 222 and the second rotary shaft 225, such as a spline connection or a flat key connection. The sixth gear 222 is engaged with the fifth gear 221. An outer diameter of the sixth gear 222 may be greater than an outer diameter of the fifth gear 221. The seventh gear 223 is sleeved over and fixedly connected to the second rotary shaft 225. The seventh gear 223 may be in a key connection, in a flat key connection, or in a spline connection with the second rotary shaft 225. An outer diameter of the seventh gear 223 may be smaller than the outer diameter of the sixth gear 222. The eighth gear 224 is sleeved over and connected to the second half shaft 23. There is a key connection between the eighth gear 224 and the second half shaft 23, such as a spline connection or a flat key connection. The eighth gear 224 is engaged with the seventh gear 223. An outer diameter of the eighth gear 224 is greater than the outer diameter of the seventh gear 223.

In this way, the second main shaft 212 of the second motor 21 drives the fifth gear 221 to rotate. Then, the fifth gear 221 drives the sixth gear 222 to rotate. Then, the sixth gear 222 drives the second rotary shaft 225 to rotate. Then, the second rotary shaft 225 drives the seventh gear 223 to rotate. Then, the seventh gear 223 drives the eighth gear 224 to rotate. Then, the eighth gear 224 drives the second half shaft 23 to rotate.

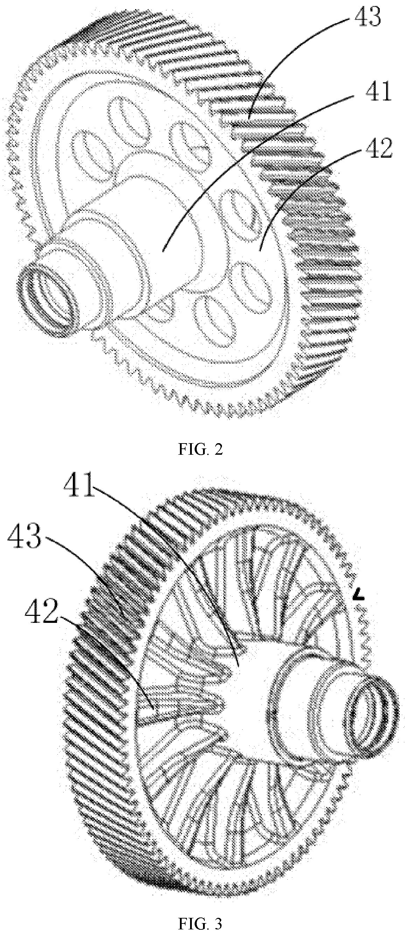

As illustrated in FIG. 2 and FIG. 3, each of the gears includes a hub 41, a spoke 42, and a rim 43. The hub 41 is located in a middle part of the gear and constructed as a cylindrical or annular shape. The hub 41 is sleeved over the rotary shaft and connected to the rotary shaft. The rim 43 is annular and located at an outermost side of the gear, and tooth is provided on the rim 43. The spoke 42 is located between the rim 43 and the hub 41 and connects the rim 43 and the hub 41.

The first gear 121 is arranged corresponding to the fifth gear 221, and the first gear 121 and the fifth gear 221 may have a same outer diameter. A spoke of the first gear 121 is different from a spoke of the fifth gear 221 in structure. One of the spoke of the first gear 121 and the spoke of the fifth gear 221 is constructed as a plate-shaped structure having a weight reduction hole, and the other one of the spoke of the first gear 121 and the spoke of the fifth gear 221 is constructed as a spoke-shaped structure. Alternatively, each of the spoke of the first gear 121 and the spoke of the fifth gear 221 is constructed to have a plate-shaped structure with a weight reduction hole, and the spoke of the first gear 121 is different from the spoke of the fifth gear 221 in thickness.

The second gear 122 is arranged corresponding to the sixth gear 222, and the second gear 122 and the sixth gear 222 may have a same outer diameter. A spoke of the second gear 122 is different from a spoke of the sixth gear 222 in structure. One of the spoke of the second gear 122 and the spoke of the sixth gear 222 is constructed as a plate-shaped structure having a weight reduction hole, and the other one of the spoke of the second gear 122 and the spoke of the sixth gear 222 is constructed as a spoke-shaped structure. Alternatively, each of the spoke of the second gear 122 and the spoke of the sixth gear 222 is constructed to have a plate-shaped structure with a weight reduction hole, and the spoke of the second gear 122 is different from the spoke of the sixth gear 222 in thickness.

The third gear 123 is arranged corresponding to the seventh gear 223, and the third gear 123 and the seventh gear 223 may have a same outer diameter. A spoke of the third gear 123 is different from a spoke of the seventh gear 223 in structure. One of the spoke of the third gear 123 and the spoke of the seventh gear 223 is constructed as a plate-shaped structure having a weight reduction hole, and the other one of the spoke of the third gear 123 and the spoke of the seventh gear 223 is constructed as a spoke-shaped structure. Alternatively, each of the spoke of the third gear 123 and the spoke of the seventh gear 223 is constructed to have a plate-shaped structure with a weight reduction hole, and the spoke of the third gear 123 is different from the spoke of the seventh gear 223 in thickness.

The fourth gear 124 is arranged corresponding to the eighth gear 224, and the fourth gear 124 and the outer diameter of the eighth gear 224 may have a same outer diameter. A spoke of the fourth gear 124 is different from a spoke of the eighth gear 224 in structure. One of the spoke of the fourth gear 124 and the spoke of the eighth gear 224 is constructed as a plate-shaped structure having a weight reduction hole, and the other one of the spoke of the fourth gear 124 and the spoke of the eighth gear 224 is constructed as a spoke-shaped structure. Alternatively, each of the spoke of the fourth gear 124 and the spoke of the eighth gear 224 is constructed to have a plate-shaped structure with a weight reduction hole, and the spoke of the fourth gear 124 is different from the spoke of the eighth gear 224 in thickness.

In this way, since the spoke of the first gear 121 is different from the spoke of the fifth gear 221 in shape and/or thickness, the spoke of the second gear 122 is different from the spoke of the sixth gear 222 in shape and/or thickness, the spoke of the third gear 123 is different from the spoke of the seventh gear 223 in shape and/or thickness, and the spoke of the fourth gear 124 is different from the spoke of the eighth gear 224 in shape and/or thickness, orders of the first parallel shaft gear mechanism 12 and the second parallel shaft gear mechanism 22 are separated, thereby avoiding an order overlap of the first parallel shaft gear mechanism 12 and the second parallel shaft gear mechanism 22. As a result, order noise when the first parallel shaft gear mechanism 12 and the second parallel shaft gear mechanism 22 operate simultaneously can be significantly reduced, improving NVH performance of the vehicle and obtaining a better driving experience.

In an exemplary embodiment, a length of the first rotary shaft 125 is different from a length of the second rotary shaft 225. The length of the first rotary shaft 125 is greater than the length of the second rotary shaft 225, or the length of the second rotary shaft 225 is greater than the length of the first rotary shaft 125.

The first rotary shaft 125 is different from the second rotary shaft 225 in shape. One of the first rotary shaft 125 and the second rotary shaft 225 is a solid shaft, and the other one of the first rotary shaft 125 and the second rotary shaft 225 is a solid shaft.

Since the first rotary shaft 125 is different from the second rotary shaft 225 in length and/or shape, orders of the first parallel shaft gear mechanism 12 and the second parallel shaft gear mechanism 22 are separated, thereby avoiding an order overlap of the first parallel shaft gear mechanism 12 and the second parallel shaft gear mechanism 22. As a result, order noise when the first drive mechanism 1 and the second drive mechanism 2 operate simultaneously can be significantly reduced, improving NVH performance of the vehicle and obtaining a better driving experience.

In an exemplary embodiment, the first half shaft 13 is different from the second half shaft 23 in length. The first half shaft 13 is longer than the second half shaft 23, or the second half shaft 23 is longer than the first half shaft 13.

The first half shaft 13 is different from the second half shaft 23 in shape. One of the first half shaft 13 and the second half shaft 23 is a solid shaft, and the other one of the first half shaft 13 and the second half shaft 23 is a solid shaft.

Since the first half shaft 13 is different from the second half shaft 23 in length and/or shape, orders of the first drive mechanism 1 and the second drive mechanism 2 are separated, thereby avoiding an order overlap of the first drive mechanism 1 and the second drive mechanism 2. As a result, order noise when the first drive mechanism 1 and the second drive mechanism 2 operate simultaneously can be significantly reduced, improving NVH performance of the vehicle and obtaining a better driving experience.

In an exemplary embodiment, the first main shaft 112 of the first motor 11 is different from the second main shaft 212 of the second motor 21 in length. The first main shaft 112 of the first motor 11 is longer than the second main shaft 212 of the second motor 21, or the second main shaft 212 of the second motor 21 is longer than the first main shaft 112 of the first motor 11.

The first main shaft 112 is different from the second main shaft 212 in shape. One of the first main shaft 112 and the second main shaft 212 is a solid shaft, and the other one of the first main shaft 112 and the second main shaft 212 is a solid shaft.

Since the first main shaft 112 is different from the second main shaft 212 in length and/or shape, orders of the first drive mechanism 1 and the second drive mechanism 2 are separated, thereby avoiding an order overlap of the first drive mechanism 1 and the second drive mechanism 2. As a result, order noise when the first drive mechanism 1 and the second drive mechanism 2 operate simultaneously can be significantly reduced, improving NVH performance of the vehicle and obtaining a better driving experience.

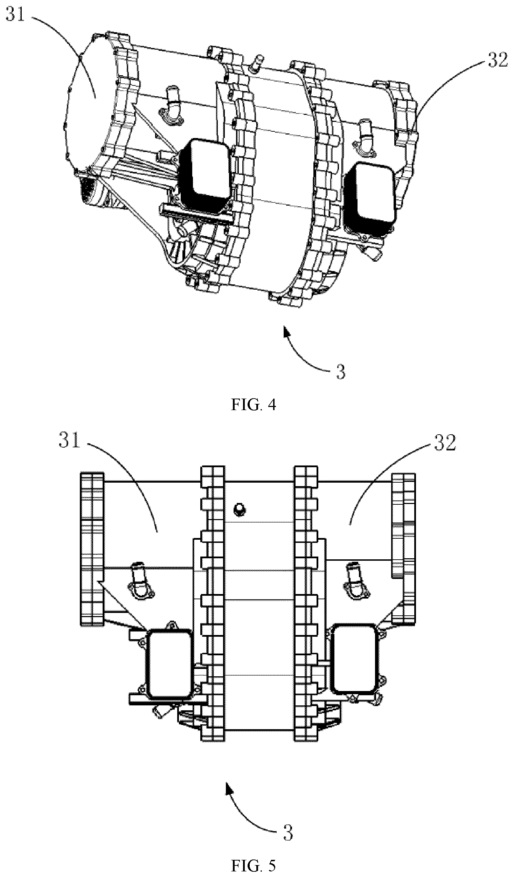

In an exemplary embodiment, as illustrated in FIG. 4 and FIG. 5, the dual-electric motor electric drive assembly further includes a housing 3 configured to accommodate the first motor 11, the second motor 21, the first parallel shaft gear mechanism 12, the second parallel shaft gear mechanism 22, the first half shaft 13, and the second half shaft 23.

The housing 3 includes a first side 31 and a second side 32 opposite to the first side 31. The first side 31 is close to the first drive mechanism 1 and includes the first motor 11. The second side 32 is close to the second drive mechanism 2 and includes the second motor 21. The first side 31 is different from the second side 32 in shape. Optionally, a volume of the first side 31 is greater than a volume of the second side 32.

Since the first side 31 and the second side 32 of the housing 3 are different in length, a transmission path of noise emitted by the first drive mechanism 1 is different from a transmission path of noise emitted by the second drive mechanism 2, causing vibrations of two sides of the housing 3 and occurring a wave peak staggered frequency, improving NVH performance of the vehicle.

In an exemplary embodiment, the first parallel shaft gear mechanism 12 further includes a first bearing 126. The first bearing 126 is sleeved over the main shaft 112 of the first motor 11. The first bearing 126 supports the first main shaft 112. Two first bearings 126 may be provided. The two first bearings 126 are disposed at two opposite sides of the first gear 121, respectively.

The second parallel shaft gear mechanism 22 further includes a second bearing 226. The second bearing 226 is sleeved over the second main shaft 212 of the second motor 21. The second bearing 226 supports the second main shaft 212. Two second bearings 226 may be provided. The two second bearings 226 are disposed at two opposite sides of the fifth gear 221, respectively.

The first bearing 126 and the second bearing 226 are different in type. One of the first bearing 126 and the second bearing 226 is a ball bearing, and the other one of the first bearing 126 and the second bearing 226 is a roller bearing. Alternatively, the first bearing 126 and the second bearing 226 are different in size. For example, the first bearing 126 is larger than the second bearing 226, or the second bearing 226 is larger than the first bearing 126.

Since the first bearing 126 is different from the second bearing 226 in type and/or size, orders of the first parallel shaft gear mechanism 12 and the second parallel shaft gear mechanism 22 are separated, thereby avoiding an order overlap of the first parallel shaft gear mechanism 12 and the second parallel shaft gear mechanism 22. As a result, order noise when the first drive mechanism 1 and the second drive mechanism 2 operate simultaneously can be significantly reduced, improving NVH performance of the vehicle.

In an exemplary embodiment, the first parallel shaft gear mechanism 12 further includes a third bearing 127. The third bearing 127 is sleeved over the first rotary shaft 125. The third bearing 127 supports the first rotary shaft 125.

The second parallel shaft gear mechanism 22 further includes a fourth bearing 227. The fourth bearing 227 is sleeved over the second rotary shaft 225. The fourth bearing 227 supports the second rotary shaft 225.

The third bearing 127 and the fourth bearing 227 are different in type. One of the third bearing 127 and the fourth bearing 227 is a ball bearing, and the other one of the third bearing 127 and the fourth bearing 227 is a roller bearing. Alternatively, the third bearing 127 and the fourth bearing 227 are different in size. For example, the third bearing 127 is larger than the fourth bearing 227, or the fourth bearing 227 is larger than the third bearing 127.

Since the third bearing 127 is different from the fourth bearing 227 in type and/or size, orders of the first parallel shaft gear mechanism 12 and the second parallel shaft gear mechanism 22 are separated, thereby avoiding an order overlap of the first parallel shaft gear mechanism 12 and the second parallel shaft gear mechanism 22. As a result, order noise when the first drive mechanism 1 and the second drive mechanism 2 operate simultaneously can be significantly reduced, improving NVH performance of the vehicle.

In an exemplary embodiment, the first parallel shaft gear mechanism 12 further includes a fifth bearing 128. The fifth bearing 128 is sleeved over the first half shaft 13. The fifth bearing 128 supports the first rotary shaft 125. Two fifth bearings 128 may be provided. The two fifth bearings 128 may be disposed at two opposite ends of the first half shaft 13.

The second parallel shaft gear mechanism 22 further includes a sixth bearing 228. The sixth bearing 228 is sleeved over the second half shaft 23. The sixth bearing 228 supports the second half shaft 23. Two sixth bearings 228 may be provided. The two sixth bearings 228 may be disposed at two opposite ends of the second half shaft 23.

The fifth bearing 128 and the sixth bearing 228 are different in type. One of the fifth bearing 128 and the sixth bearing 228 is a ball bearing, and the other one of the sixth bearing 228 and the fifth bearing 128 is a roller bearing. Alternatively, the fifth bearing 128 and the sixth bearing 228 are different in size. For example, the fifth bearing 128 is larger than the sixth bearing 228, or the fifth bearing 128 is larger than the sixth bearing 228.

Since the fifth bearing 128 is different from the sixth bearing 228 in type and/or size, orders of the first parallel shaft gear mechanism 12 and the second parallel shaft gear mechanism 22 are separated, thereby avoiding an order overlap of the first parallel shaft gear mechanism 12 and the second parallel shaft gear mechanism 22. As a result, order noise when the first drive mechanism 1 and the second drive mechanism 2 operate simultaneously can be significantly reduced, improving NVH performance of the vehicle.

The present disclosure describes a plurality of embodiments, but the description is exemplary rather than restrictive. In addition, it is obvious for those of ordinary skill in the art that there may be many more embodiments and realization solutions within the scope of the embodiments described in the present disclosure. Although many possible combinations of features are illustrated in the drawings and discussed in the detailed implementations, many other combinations of the disclosed features are also possible. Unless specifically limited, any feature or element of any embodiment may be used in combination with, or may be substituted for, any other feature or element of any other embodiment.

The present disclosure includes and contemplates combinations with features and elements known to those of ordinary skill in the art. The embodiments, features, and elements already disclosed in the present disclosure may also be combined with any conventional features or elements, to form the unique inventive solutions defined by the claims. Any feature or element of any embodiment may also be combined with features or elements from other inventive embodiments to form another unique inventive embodiment defined by the claims. Therefore, it should be understood that any of the features shown and/or discussed in the present disclosure may be implemented alone or in any suitable combination. Therefore, the embodiments are not subject to any restrictions other than those made pursuant to the attached claims and their equivalent substitutions. In addition, various modifications and changes may be made within the scope of the attached claims.

In addition, when describing a representative embodiment, the specification may have presented the method and/or process as a particular sequence of steps. However, the method or process should not be limited to steps in a particular order as described herein, without relying on the particular order of the steps described herein. As understood by those of ordinary skill in the art, other step sequences are possible. Therefore, the specific order of the steps set forth in the specification should not be construed as limiting the claims. In addition, the claims for this method and/or process should not be limited to the steps in which they are performed in the described order. Those skilled in the art may readily understand that these orders may be varied and still be within the spirit and scope of the embodiments of the present disclosure.

## Claims

1. A dual-electric motor electric drive assembly, comprising a first drive mechanism and a second drive mechanism that are located at one drive axle, wherein:
the first drive mechanism comprises a first motor, a first parallel shaft gear mechanism, and a first half shaft that are connected sequentially; and
the second drive mechanism comprises a second motor, a second parallel shaft gear mechanism, and a second half shaft that are connected sequentially,
wherein a structure of the first drive mechanism is different from a structure of the second drive mechanism to prevent an overlapping of a resonance frequency of the first drive mechanism and a resonance frequency of the second drive mechanism.

2. The dual-electric motor electric drive assembly according to claim 1, wherein a gear of the first parallel shaft gear mechanism is different from a gear of the second parallel shaft gear mechanism in shape.

3. The dual-electric motor electric drive assembly according to claim 2, wherein a spoke of the gear of the first parallel shaft gear mechanism is different from a spoke of the gear of the second parallel shaft gear mechanism in shape and/or thickness.

4. The dual-electric motor electric drive assembly according to claim 1, wherein a rotary shaft of the first parallel shaft gear mechanism is different from a rotary shaft of the second parallel shaft gear mechanism in length and/or shape.

5. The dual-electric motor electric drive assembly according to claim 1, wherein the first half shaft is different from the second half shaft in length and/or shape.

6. The dual-electric motor electric drive assembly according to claim 1, wherein:
the first motor comprises a first main shaft connected to the first parallel shaft gear mechanism; and
the second motor comprises a second main shaft connected to the second parallel shaft gear mechanism,
wherein the first main shaft is different from the second main shaft in length and/or shape.

7. The dual-electric motor electric drive assembly according to claim 1, wherein a bearing of the first parallel shaft gear mechanism is different from a bearing of the second parallel shaft gear mechanism in type and/or size.

8. The dual-electric motor electric drive assembly according to claim 1, further comprising a housing configured to accommodate the first motor, the first parallel shaft gear mechanism, the first half shaft, the second motor, the second parallel shaft gear mechanism, and the second half shaft,
wherein a shape of the housing located at a side of the housing close to the first driving mechanism is different from a shape of the housing located at a side of the housing close to the second driving mechanism.

9. The dual-electric motor electric drive assembly according to any one of claims 1 to 8, wherein:
the first half shaft, the first main shaft of the first motor, the second half shaft, and the second main shaft of the second motor are parallel to each other;
the first parallel shaft gear mechanism comprises:
a first gear sleeved over and connected to the first main shaft;
a first rotary shaft disposed at a side of the first main shaft and parallel to the first main shaft, the first rotary shaft being rotatable around its own axis;
a second gear sleeved over the first rotary shaft, connected to the first rotary shaft, and engaged with the first gear;
a third gear sleeved over and connected to the first rotary shaft; and
a fourth gear sleeved over the first half shaft, connected to the first half shaft, and engaged with the third gear;
the second parallel shaft gear mechanism comprises:
a fifth gear sleeved over and connected to the second main shaft;
a second rotary shaft disposed at a side of the second main shaft and parallel to the second main shaft, the second rotary shaft being rotatable around its own axis;
a sixth gear sleeved over the second rotary shaft, connected to the second rotary shaft, and engaged with the fifth gear;
a seventh gear sleeved over and connected to the second rotary shaft; and
an eighth gear sleeved over the second half shaft, connected to the second half shaft, and engaged with the seventh gear,
wherein a spoke of the first gear is different from a spoke of the fifth gear in shape and/or wall thickness, wherein a spoke of the second gear is different from a spoke of the sixth gear in shape and/or wall thickness, wherein a spoke of the third gear is different from a spoke of the seventh gear in shape and/or wall thickness, and wherein a spoke of the fourth gear is different from a spoke of the eighth gear in shape and/or wall thickness.

10. The dual-electric motor electric drive assembly according to claim 9, wherein a length of the first rotary shaft is different from a length of the second rotary shaft.

11. A vehicle, comprising the dual-electric motor electric drive assembly according to any one of claims 1 to 10.
